(19) Europäisches Patentamt
European Patent Office
Office européen des brevets

(11) **EP 3 202 598 B1**

(12) **EUROPEAN PATENT SPECIFICATION**

(45) Date of publication and mention
of the grant of the patent:
**10.10.2018 Bulletin 2018/41**

(21) Application number: **15847494.0**

(22) Date of filing: **21.08.2015**

(51) Int Cl.:
***B60C 17/00*** *(2006.01)*    ***B60C 3/04*** *(2006.01)*
***B60C 15/06*** *(2006.01)*

(86) International application number:
**PCT/JP2015/004207**

(87) International publication number:
**WO 2016/051650 (07.04.2016 Gazette 2016/14)**

(54) **RUN-FLAT TIRE**

NOTLAUFREIFEN

PNEU ZÉRO PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2014 JP 2014205249**

(43) Date of publication of application:
**09.08.2017 Bulletin 2017/32**

(73) Proprietor: **Bridgestone Corporation
Tokyo 104-8340 (JP)**

(72) Inventors:
• **KUWAYAMA, Isao
Tokyo 104-8340 (JP)**

• **HATANAKA, Shintaro
Tokyo 104-8340 (JP)**

(74) Representative: **Oxley, Robin John George
Marks & Clerk LLP
90 Long Acre
London WC2E 9RA (GB)**

(56) References cited:
**EP-A1- 2 781 372       WO-A1-2015/182153
JP-A- H 082 220       JP-A- 2005 247 007
JP-A- 2013 063 765    JP-A- 2013 224 054
US-A- 5 988 247**

**Description**

TECHNICAL FIELD

This disclosure relates to a run-flat tire.

BACKGROUND

Conventionally, as disclosed in PTL1, suggested is a technique for improving fuel efficiency by using a narrow-width, large-diameter tire, which is desired as an effective technique for use as, e.g., a tire for electric automobiles.
PTL1: WO2012/176476A1. Attention is also drawn to the disclosures of EP2,781,372 showing a tire according to the preamble of claim 1 and WO2015/182153, which has been published after the filing date of the present application.

SUMMARY

(Technical Problem)

In the aforementioned technique, run-flat travelling performances are desired as well. However, as for a run-flat tire having on a sidewall portion a side reinforcing rubber with a crescent-like cross section, considering that high fuel efficiency is deteriorated due to weight increase caused by the side reinforcing rubber, it is desired that the aforementioned narrow-width, large-diameter tire achieves both high fuel efficiency and run-flat durability.
This disclosure is to provide a run-flat tire which improves the fuel efficiency, and simultaneously ensures the run-flat durability.

(Solution to Problem)

An aspect of the invention provides a run-flat tire according to claim 1.
The run-flat tire of this disclosure includes a tread portion, a pair of sidewall portions continuous on both sides of the tread portion, bead portions continuous on each sidewall portion, side reinforcing rubbers with crescent-like cross section disposed on the sidewall portions, and a carcass formed of plies of radially arranged cords extending toroidally between the pair of bead portions, wherein: when the tire is mounted to a rim, and an internal pressure of 250 kPa or more is applied to the tire, in a case where a sectional width SW of the tire is less than 165 mm, a ratio of the sectional width SW to an outer diameter OD of the tire, SW/OD, is 0.26 or less; and in a case where the sectional width SW of the tire is 165 mm or more, the sectional width SW and the outer diameter OD of the tire satisfy a relation expression $OD \geq 2.135 \times SW + 282.3$ (mm); and when H1 is a tire radial maximum length of the side reinforcing rubber in a tire widthwise cross section in a reference state where the tire is mounted to a rim and filled with a predetermined internal pressure with no load applied thereon, a relation expression $10(mm) \leq (SW/OD) \times H1 \leq 20(mm)$ is satisfied.
Here, the "rim" is a valid industrial standard for the region in which the tire is produced or used, and refers to a standard rim of an applicable size (the "Measuring Rim" in the STANDARDS MANUAL of ETRTO, and the "Design Rim" in the "YEAR BOOK" of TRA) which is described or will be described in the "JATMA Year Book" of JATMA (The Japan Automobile Tyre Manufacturers Association) in Japan, the "ETRTO STANDARD MANUAL" of ETRTO (the European Tyre and Rim Technical Organisation) in Europe, or the "TRA YEAR BOOK" of TRA (the Tire and Rim Association,Inc.) in the United States of America, etc. (namely, the aforementioned "rim" is inclusive of current sizes and sizes which are possibly included in the aforementioned industrial standards. Examples for "size which will be described" are the sizes described as "FUTURE DEVELOPMENTS" in ETRTO 2013 edition.). As for sizes not described in the aforementioned industrial standards, the "rim" refers to rims having a width corresponding to the bead width of the tire.
Moreover, the "predetermined internal pressure" refers to a state that the tire is applied an air pressure of a single wheel corresponding to a maximum load capability (maximum air pressure) at applicable size and ply rating, as described by JATMA, etc. As for sizes not described in the aforementioned industrial standards, the "predetermined internal pressure" refers to an air pressure corresponding to a maximum load capability determined depending on the vehicle to which the tire is mounted (maximum air pressure). Further, the "maximum load" mentioned below refers to a load corresponding to the aforementioned maximum load capability.
In the case where one or both of the "tire radial outermost point of the bead filler" and the "tire radial outermost point of the bead core" mentioned below exist in a plurality, a segment is connected in a manner such that H2 is maximum.
The "maximum thickness measured in a direction perpendicular to the carcass" mentioned below refers to, in the case where the carcass has a folded-up structure formed of a carcass main body and a carcass folded-up portion, a maximum thickness measured in a direction perpendicular to the carcass main body.

(Advantageous Effect)

According to this disclosure, it is possible to provide a run-flat tire which improves the fuel efficiency, and simultaneously ensures the run-flat durability.

BRIEF DESCRIPTION OF THE DRAWINGS

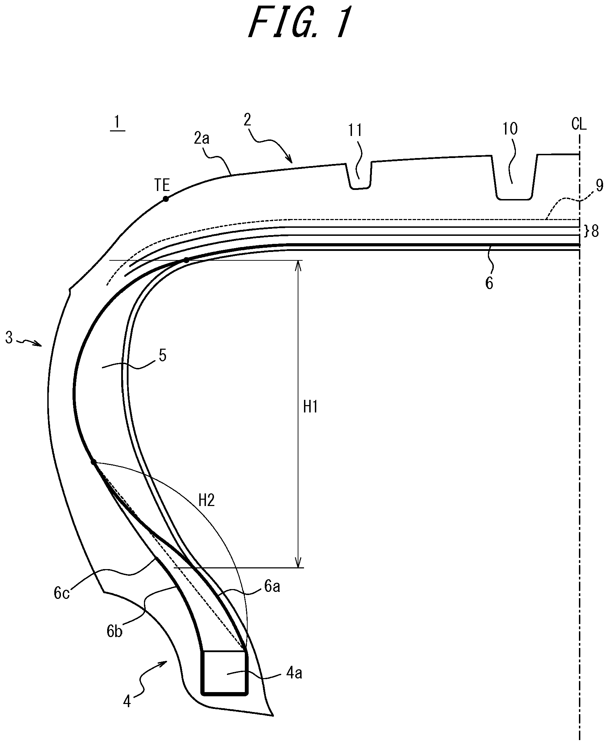

FIG. 1 illustrates a tire widthwise cross-sectional view of a run-flat tire according to one embodiment of this disclosure.

DETAILED DESCRIPTION

Hereinafter, an embodiment of this disclosure will be described with reference to the drawings.

FIG. 1 illustrates a tire widthwise cross-sectional view of a run-flat tire (hereinafter referred to as merely "tire") according to one embodiment of this disclosure. Illustrated in FIG. 1 is a tire widthwise cross section of the tire in a reference state as being mounted to a rim and filled with a predetermined internal pressure with no load applied thereon. FIG. 1 illustrates merely one tire widthwise half portion partitioned by the tire equatorial plain CL, while the other tire widthwise half portion is of the same structure as well.

Here, when this tire 1 is mounted to a rim, and an internal pressure of 250 kPa or more is applied to the tire 1, in a case where a sectional width SW of the tire is less than 165 mm, a ratio of the sectional width SW (mm) to an outer diameter OD (mm) of the tire 1 , SW/OD, is 0.26 or less; and in a case where the sectional width SW of the tire is 165 mm or more, the sectional width SW (mm) and the outer diameter OD (mm) of the tire 1 satisfy a relation expression $OD \geq 2.135 \times SW+282.3$ (mm).

The run-flat tire of this disclosure is not limited, and may be exemplified as those of tire size 145/60R19, 145/60R18, 145/60R17, 155/70R19, 155/55R19, 155/55R18, 165/60R19, 165/55R18, 175/60R19, 175/55R18, 175/55R20, 175/60R18, 185/60R20, 185/55R20, 185/60R19, 185/55R19, 195/50R20, 195/55R20, 205/50R21, etc.

As illustrated in FIG. 1, the tire 1 includes a tread portion 2, a pair of (one illustrated) sidewall portions 3 continuous on both sides (one side illustrated) of the tread portion 2, bead portions 4 continuous on each (one illustrated) sidewall portion 3, side reinforcing rubbers 5 with crescent-like cross section disposed on the sidewall portions 3, a carcass 6 formed of plies of radially arranged cords extending toroidally between the pair of (one illustrated) bead portions 4.

As illustrated in FIG. 1, the bead portions 4 have bead cores 4a. In this disclosure, the bead cores 4a may have various shapes such as circular cross section, polygonal cross section, etc.

Moreover, in the present embodiment, on tire radial outer sides of the bead cores 4a, bead fillers 7 with an approximately triangular cross section are arranged. On the other hand, in this disclosure, a structure without the bead fillers 7 may be used as well.

Further, the bead portions 4 may have reinforcement members such as reinforcing rubber layers, reinforcing cord layers and the like disposed thereon. These reinforcement members may be disposed on various positions on the bead portions 4; for example, the reinforcement members may be disposed on tire widthwise outer sides and/or inner sides of the bead fillers 7.

In the present embodiment, the carcass 6 has a carcass main body 6a and a carcass folded-up portion 6b, the carcass main body 6a fixed to the pair of bead cores 4a, the carcass folded-up portion 6b extending from the carcass main body 6a and formed by folding up a circumference of the bead cores 4a from a tire widthwise inner side to a tire widthwise outer side.

On the other hand, in this disclosure, the carcass 6 is not limited to folded-up structure, but may be, for example, a structure such that the bead cores 4a are separated into a plurality, and the carcass 6 is surrounded by the plurality of separated bead core members.

In this disclosure, the carcass line may be of various shapes, for example, a carcass maximum width position may be set either close to the bead portions 4 side or close to the tread portion 2 side.

The number of cords of the carcass may be in a range of 20 to 60 per 50 mm, without being limited thereto.

In the present embodiment, a folded-up end 6c of the folded-up portion 6b of the carcass 6 is located on a tire radial side inner than a tire radial outer end of the bead filler 7, while it is possible to locate the same on a tire radial outer end of the bead filler 7 or a tire radial side outer than a tire maximum width position.

Moreover, in the case where the carcass 6 is formed of a plurality of carcass plies, the positions of the folded-up ends 6c of each ply may be different from each other.

In the present embodiment, the carcass 6 extends continuously between the bead cores 4a completely, while in this disclosure, the carcass 6 is not limited to the aforementioned example, and may, for example, extend from the bead core 4a to a tire widthwise outer region of the tread portion 2, to form a pair of divided carcasses of which a tire widthwise central region is extracted.

Here, as illustrated in FIG. 1, this tire 1 further has a belt 8 formed of belt layers (two in the illustrated example) on a tire radial outer side of a crown portion of the carcass 6, and reinforcing belt layers 9 (one in the illustrated example) arranged on a tire radial outer side of the belt 8.

Here, in the illustrated example, the belt 8 is an inclined belt, in which belt cords cross each other between the layers. The belt cords may be, for example, steel cords, organic fiber cords, etc., without being limited thereto. Moreover, the belt cords of each belt layer may extend at an angle of 20 to 75° with respect to the tire circumferential direction.

Moreover, the belt reinforcement layers 9 may use spiral cords coiling in a spiral shape approximately in the tire circumferential direction, high rigidity cords (cords having a Young's modulus of 50 MPa or more determined according to JIS L1017 8.8 (2002) when tested according to JIS L1017 8.5 a) (2002)), low rigidity cords (cords having a Young's modulus of less than 50 MPa at the same conditions), high elongation cords, high heat shrinkage cords (cords having a heat shrinkage of 1% or more with a load of 50 g under 170°C), etc. Further, the cords of the belt reinforcement layers 9 may be monofilament cords, cords obtained by twisting a plurality of filaments, or even cords obtained by twisting filaments of different materials.

The number of cords of the belt reinforcement layers 9 may be in a range of 20 to 60 per 50 mm, without being limited thereto.

Moreover, the cords of the belt reinforcement layers 9 may be distributed with the rigidity, the material, the number of layers, the number of cords, etc. varying in the tire width direction. For example, the number of layers may be increased in merely the tire widthwise end, or in merely the tire widthwise central portion.

Moreover, the tire widthwise width of the belt reinforcement layers 9 may be either larger or smaller than the belt 8.

Further, in the present embodiment, the belt reinforcement layers 9 are arranged on the tire radial outer side of the belt 8, while in this disclosure, the belt reinforcement layers 9 may be arranged on the tire radial inner side of the belt 8 as well.

Here, in this disclosure, the tread portion 2 may be formed of one rubber layer, or formed by laminating in the tire radial direction a plurality of different rubber layers. In the case of using a plurality of different rubber layers, loss tangent, modulus, hardness, glass-transition temperature, material, etc. thereof may be different. Moreover, the thickness of the plurality of rubber layers may vary in the tread width direction, and merely groove bottoms of circumferential grooves may be formed of rubber layers of types different from its surroundings.

Moreover, in this disclosure, the tread portion 2 may be formed by arranging a plurality of different rubber layers in the tire width direction, and in this case, loss tangent, modulus, hardness, glass-transition temperature, material, etc. may vary among the layers. Moreover, it is possible to vary the ratio of tire widthwise width of the plurality of rubber layers in the tread radial direction, or to use rubber layers of types different from its surroundings in merely a part of the region, such as merely groove bottoms of circumferential grooves, merely the vicinity of tread edges, merely tire widthwise outermost land portions, merely a tire widthwise central land portion, etc.

In this disclosure, in a tire widthwise cross section in the aforementioned reference state, a ratio LCR/TW is preferably 0.06 or less and more preferably 0.02 or more and 0.05 or less, where LCR is a height difference, i.e., a tire radial distance between a straight line m1 and a straight line m2, m1 is a straight line parallel to the tire width direction across a point on the tread surface in the tire equatorial plain CL (a point on a virtual outer contour line of the tread in the case where the portion is a groove), m2 is a straight line parallel to the tire width direction across the tread edge TE, and TW is a tread width. This is because that the durability and the wear resistance of the tire can be improved. Here, the "tread edge" refers to a tire widthwise outermost end of a portion contacting with the road surface when filled with the aforementioned predetermined internal pressure with the maximum load applied thereon.

Further, in this disclosure, the thickness of the sidewall portions 3 is preferably thin. Specifically, in the aforementioned reference state, a tire widthwise cross section area S1 of the bead fillers 7 is preferably 1 to 4 times to a tire widthwise area S2 of the bead cores 4a. By setting S1 to 4 times or less to S2, the riding comfort can be ensured, while on the other hand, by setting S1 to one time or more to S2, the steering stability can be ensured.

In the tire of this disclosure, the loss tangent tan δ of the side reinforcing rubbers 5 is preferably 0.05 to 0.15. By setting the loss tangent tan δ to 0.05 or more, the damping property can be improved, while on the other hand, by setting the loss tangent tan δ to 0.15 or less, the heat buildup in the side reinforcing rubbers 5 can be suppressed. Further, in the tire of this disclosure, the 50% stretch modulus of the side reinforcing rubbers 5 is 1.5 to 6.0 MPa. By setting the 50% stretch modulus of the side reinforcing rubbers 5 to 1.5 MPa or more, the steering stability can be further ensured, while on the other hand, by setting the 50% stretch modulus of the side reinforcing rubbers 5 to 6.0 MPa or less, the comfort and riding comfort can be further ensure. Further, the aforementioned loss tangent tan δ and 50% stretch modulus refer to values measured with respect to a specimen 2 mm thick, 5 mm wide and 20 mm long, at the conditions of an initial strain of 1%, a dynamic strain frequency of 50 Hz, and a temperature of 60°C.

Moreover, as illustrated in FIG. 1, the side reinforcing rubbers 5 are preferably arranged on the tire widthwise inner side of the carcass 6.

When H1 is a tire radial maximum length of the side reinforcing rubber in a tire widthwise cross section in a reference state where the tire is mounted to a rim, applied a predetermined internal pressure and applied no load, the run-flat tire 1 of the present embodiment satisfies the relation expression $10(mm) \leq (SW/OD) \times H1 \leq 20(mm)$.

Hereinafter, the effects of the run-flat tire of the present embodiment are described.

We have intensively studied the problem of improving the fuel efficiency and simultaneously ensuring the run-flat durability. As a result, it was discovered that in a narrow-width, large-diameter tire satisfying the aforementioned relation expression regarding the sectional width SW and the outer diameter OD, there is a tendency that buckling occurring in the tread portion is reduced, and thus the rigidity of the side wall portions is not particularly necessary.

Then, we obtained the new knowledge that by simplifying the internal structure of the side wall portions, it is possible to improve the fuel efficiency, and simultaneously ensure the run-flat durability, and thereby accomplished this disclosure.

First, the run-flat tire of the present embodiment is a narrow-width, large-diameter tire satisfying the aforementioned relation expression regarding the sectional width SW and the outer diameter OD, and thus is capable of reducing the air resistance and the rolling resistance, and improving the fuel efficiency.

Further, by arranging side reinforcing rubbers 5 satisfying the aforementioned relation expression of $(SW/OD) \times H1$, it is possible to maintain the aforementioned improvement effect of fuel efficiency, and to simultaneously ensure the run-flat durability.

Namely, when $(SW/OD) \times H1$ is smaller than 10 (mm), the side reinforcing rubbers 5 is incapable of supporting the load in the case of low internal pressure, and thus the run-flat durability cannot be sufficiently ensured. On the other hand, when $(SW/OD) \times H1$ is larger than 20 (mm), the fuel efficiency is deteriorated duo to the weight of the side reinforcing rubbers 5. In the run-flat tire of the present embodiment, since $(SW/OD) \times H1$ is 10 (mm) or more and 20 (mm) or less, it is possible to improve the fuel efficiency and to ensure the run-flat durability.

For the same reason, $(SW/OD) \times H1$ is more preferably 12 (mm) or more and 18 (mm) or less.

Further, in a tire of a conventional size of which the sectional width SW and the outer diameter OD does not satisfy the aforementioned relation expression, in order to ensure the run-flat durability, an ordinary method is to enlarge the side reinforcing rubbers and to set $(SW/OD) \times H1$ to a large value (e.g., about 25 mm). On the other hand, in the tire of the present embodiment, as mentioned above, since the buckling of the tread portion is smaller, even if the volume of the side reinforcing rubbers 5 is reduced, and $(SW/OD) \times H1$ is set to 20 mm or less, which is smaller than the value set in a tire of a conventional size, it is possible to maintain sufficient run-flat durability, and to simultaneously further improve the fuel efficiency.

When H2 is a length of a line segment connecting a tire radial outermost point of the bead filler 7 and a tire radial outermost point of the bead core 4a in a tire widthwise cross section in the aforementioned reference state, the run-flat tire of this disclosure preferably satisfies $1.8 \leq H1/H2 \leq 3.5$. This is because that if the ratio H1/H2 is 1.8 or more, the fuel efficiency can be further ensured, while on the other hand, if the ratio H1/H2 is 3.5 or less, the run-flat durability can be further improved.

In the run-flat tire of this disclosure, a maximum thickness of the side reinforcing rubbers 5 measured in a direction perpendicular to the carcass 6 is preferably 6 mm or less. This is because that it is possible to further improve the fuel efficiency.

Further, in the run-flat tire of this disclosure, in the tire widthwise cross section in the aforementioned reference state, the folded-up end 6c of the carcass folded-up portion 6b is preferably located on a tire radial side inner than the tire maximum width position. This is because that the fuel efficiency can be further improved. For the same reason, in the tire widthwise cross section in the aforementioned reference state, a tire radial height of the folded-up end 6c of the carcass folded-up portion 6b from a tire radial innermost position direction of the carcass 6 is preferably 30 mm or less.

In this disclosure, a negative ratio (a ratio of the groove area to the area of the entire tread surface) is preferably 25% or less. Moreover, in the case where the vehicle-installed direction is determined, different negative ratio may be set on the vehicle-installed inner side and outer side partitioned by the tire equatorial plain CL. For example, the negative ratio on the vehicle-installed inner side may be set larger than the vehicle-installed outer side.

In the tire of this disclosure, the tread surface may have widthwise grooves extending in the tire width direction from the tire widthwise central region to the tread edge TE disposed thereon. In this case, it is possible to obtain a configuration without circumferential grooves extending in the tire circumferential direction on the tread surface.

The tire of this disclosure may be configured such that a plurality of lib-like land portions are partitioned by a plurality of circumferential grooves and tread edges TE. Here, the "lib-like land portion" refers to a land portion extending in the tire circumferential direction without being divided by grooves extending in the tire width direction, and the "lib-like land portion" is inclusive of those having widthwise grooves ending within the lib-like land portion and those divided by sipes.

In the aforementioned case, regarding a tire widthwise outermost land portion partitioned by a tire widthwise outermost circumferential groove and a tread edge TE among the plurality of lib-like land portions, for example, from the viewpoint of improving the steering stability, it is preferable to set the width in the tire width direction of the tire widthwise outermost land portion on the vehicle-installed outer side larger than the tire widthwise width of the tire widthwise outermost land portion on the vehicle-installed inner side.

In the tire of this disclosure, porous members for reducing the cavity resonance noise may be arranged on the tire internal surface. Moreover, for the same reason, electrostatic flocking may be performed to the tire internal surface.

In the tire of this disclosure, it is preferable to arrange on the tire internal surface an inner liner for maintaining the internal pressure of the tire, and the inner liner may be formed of a rubber layer mainly containing a butyle rubber, and a film layer mainly containing a resin.

In the tire of this disclosure, sealant members for avoiding air leakage when puncturing may be arranged on the tire internal surface.

The internal pressure of the tire of this disclosure is preferably 250 kPa or more, more preferably 280 kPa or more, and further more preferably 300 kPa or more.

Moreover, the tire of this invention has an air volume of 15000 cm$^3$ or more in order to afford probable load when used on public roads.

EXAMPLES

In order to certify the effects of this disclosure, tires according to Examples 1 to 3 and Comparative Examples 1 to 3 were produced experimentally, and subjected to tests for evaluating the fuel efficiency and the run-flat of the tires. The dimensions of each tire are as shown in the following Table 1.

<Fuel efficiency>

Tests were performed via JC08 mode travelling. The evaluation results are represented by index with the evaluation result of the tire according to Comparative Example 1 as 100, where a larger index shows a better fuel efficiency.

<Run-flat durability>

The tires were travelled on a drum testing machine at a speed of 80 km/h with a load equal to 65% of the maximum load according to the LI (Load Index) applied thereon, and the distance until the tires failed and became untravelable were measured, with 160 km for 2 hours as the finishing condition. The results of index evaluation were as shown in Table 1, with the run-flat durability of the tire of Comparative Example 1 as 100. A larger value shows a better run-flat durability of the tire.

These evaluation results are shown in the following Table 1 together with the dimensions of the tires.

[Table 1]

|  | Example 1 | Example 2 | Example 3 | Comparative Example 1 | Comparative Example 2 | Comparative Example 3 |
|---|---|---|---|---|---|---|
| SW | 155 | 155 | 155 | 225 | 155 | 155 |
| OD | 653 | 653 | 653 | 634 | 653 | 653 |
| SW/OD | 0.237 | 0.237 | 0.237 | 0.35 | 0.237 | 0.237 |
| (SW/OD)×H1 | 15 | 10 | 20 | 23 | 8 | 23 |
| Fuel efficiency | 123 | 131 | 107 | 100 | 105 | 94 |
| Run-flat durability | 150 | 120 | 180 | 100 | 100 | 115 |

As shown in Table 1, it is understood that as compared to the tires according to Comparative Examples 1 to 3, each tire according to Examples 1 to 3 achieves both the fuel efficiency and the run-flat durability.

REFERENCE SIGNS LIST

1      run-flat tire

| | |
|---|---|
| 2 | tread portion |
| 3 | sidewall portion |
| 4 | bead portion |
| 4a | bead core |
| 5 | side reinforcing rubber |
| 6 | carcass |
| 6a | carcass main body |
| 6b | carcass folded-up portion |
| 6c | folded-up end |
| 7 | bead filler |
| 8 | belt |
| 9 | belt reinforcement layer |
| CL | tire equatorial plain |
| TE | tread edge |

**Claims**

1. A tire (1) comprising a tread portion (2), a pair of sidewall portions (3) continuous on both sides of the tread portion (2), bead portions (4) continuous on each sidewall portion, side reinforcing rubbers (5), and a carcass (6) formed of plies of radially arranged cords extending toroidally between the pair of bead portions (4), wherein:

   when the tire (1) is mounted to a rim, and an internal pressure of 250 kPa or more is applied to the tire (1),
   in a case where a sectional width SW of the tire (1) is less than 165 mm, a ratio of the sectional width SW to an outer diameter OD of the tire, SW/OD, is 0.26 or less; and
   in a case where the sectional width SW of the tire is 165 mm or more, the sectional width SW and the outer diameter OD of the tire (1) satisfy a relation expression
   OD≥2.135×SW+282.3 (mm); **characterised in that**:
   the tire is a run-flat tire; **in that**
   the side reinforcing rubbers (5) comprise crescent-like cross section disposed on the sidewall portions (3); **in that**
   when H1 (mm) is a tire radial maximum length of the side reinforcing rubber (5) in a tire widthwise cross section in a reference state where the tire (1) is mounted to a rim and filled with a predetermined internal pressure with no load applied thereon, a relation expression

$$10(\text{mm}) \leq (\text{SW/OD}) \times \text{H1} \leq 20(\text{mm})$$

   is satisfied; **in that**
   the 50% stretch modulus of the side reinforcing rubbers (5) is 1.5 to 6.0 Mpa; and **in that**
   the tire (1) has an air volume of 15000 cm$^3$ or more.

2. The run-flat tire (1) according to claim 1, wherein:

   the bead portions (4) have bead cores (4a), and further have bead fillers (7) on a tire radial outer side of the bead cores (4a); and
   when H2 is a length of a straight line segment connecting a tire radial outermost point of the bead filler (7) and a tire radial outermost point of the bead core (4a) in a tire widthwise cross section in the reference state, H1 and H2 satisfy

$$1.8 \leq \text{H1/H2} \leq 3.5.$$

3. The run-flat tire (1) according to claim 1 or 2, wherein: a maximum thickness of the side reinforcing rubbers (5) measured in a direction perpendicular to the carcass (6) is 6 mm or less.

4. The run-flat tire according to any one of claims 1 to 3, wherein:

the bead portions (4) have bead cores (4a),

the carcass (6) has a carcass main body (6a) and a carcass folded-up portion (6b), the carcass main body (6a) fixed to the pair of bead cores (4a), the carcass folded-up portion (6b) extending from the carcass main body (6a) and formed by folding up a circumference of the bead cores (4a) from a tire widthwise inner side to a tire widthwise outer side, and

in the tire widthwise cross section in the reference state, the folded-up end (6c) of the carcass folded-up portion (6b) is located on a tire radial side inner than a tire maximum width position.

5. The run-flat tire (1) according to any one of the preceding claims, wherein the carcass (6) forms a pair of divided carcasses of which a tire widthwise central region is extracted.

6. The run-flat tire (1) according to any one of the preceding claims, wherein a tire radial height of the folded-up end (6c) of the carcass folded-up portion (6b) from a tire radial innermost position direction of the carcass (6) is 30 mm or less.

## Patentansprüche

1. Reifen (1), der einen Laufflächenabschnitt (2), ein Paar von Seitenwandabschnitten (3) durchgehend auf beiden Seiten des Laufflächenabschnitts (2), Wulstabschnitte (4) durchgehend an jedem Seitenwandabschnitt, Seitenverstärkungsgummis (5) und eine Karkasse (6), die aus Lagen in Radialrichtung angeordneter Kords gebildet ist, die sich kreisringförmig zwischen dem Paar von Wulstabschnitten (4) erstreckt, umfasst, wobei:

wenn der Reifen (1) auf einer Felge montiert ist und ein Innendruck von 250 kPa oder mehr an den Reifen (1) angelegt wird,

in einem Fall, in dem die Schnittbreite SW des Reifens (1) geringer als 165 mm ist, ein Verhältnis der Schnittbreite SW zu einem Außendurchmesser OD des Reifens, SW/OD, 0,26 oder weniger beträgt und

in einem Fall, in dem die Schnittbreite SW des Reifens 165 mm oder mehr beträgt, die Schnittbreite SW und der Außendurchmesser OD des Reifens (1) einen Vergleichsausdruck

$OD \geq 2,135 \times SW + 282,3$ (mm) erfüllen, **dadurch gekennzeichnet, dass**:

der Reifen ein Notlaufreifen ist, dadurch, dass

die Seitenverstärkungsgummis (5) einen halbmondartigen Querschnitt umfassen, der auf den Seitenwandabschnitten (3) angeordnet ist, dadurch, dass

wenn H1 (mm) eine in Reifenradialrichtung maximale Länge des Seitenverstärkungsgummis (5) in einem Reifenbreiten-Querschnitt in einem Referenzzustand ist, wobei der Reifen (1) auf einer Felge montiert und mit einem vorbestimmten Innendruck gefüllt ist, ohne dass eine Last auf denselben ausgeübt wird, ein Vergleichsausdruck

$$10 \text{ (mm)} \leq (SW/OD) \times H1 \leq 20 \text{ (mm)}$$

erfüllt ist, dadurch, dass

der 50%-Reckmodul der Seitenverstärkungsgummis (5) 1,5 bis 6,0 Mpa beträgt und dadurch, dass

der Reifen (1) ein Luftvolumen von 15000 cm$^3$ oder mehr aufweist.

2. Notlaufreifen (1) nach Anspruch 1, wobei:

die Wulstabschnitte (4) Wulstkerne (4a) aufweisen und ferner Kernreiter (7) auf einer in Reifenradialrichtung äußeren Seite der Wulstkerne (4a) aufweisen und,

wenn H2 eine Länge einer geraden Strecke ist, die einen in Reifenradialrichtung äußersten Punkt des Kernreiters (7) und einen in Reifenradialrichtung äußersten Punkt des Wulstkerns (4a) in einem Reifenbreiten-Querschnitt im Referenzzustand verbindet, H1 und H2 Folgendes erfüllen:

$$1,8 \leq H1/H2 \leq 3,5.$$

3. Notlaufreifen (1) nach Anspruch 1 oder 2, wobei: eine maximale Dicke der Seitenverstärkungsgummis (5), gemessen in einer Richtung, senkrecht zur Karkasse (6), 6 mm oder weniger beträgt.

4. Notlaufreifen (1) nach einem der Ansprüche 1 bis 3, wobei:

die Wulstabschnitte (4) Wulstkerne (4a) aufweisen,
die Karkasse (6) einen Karkassen-Hauptabschnitt (6a) und einen Karkassen-Umschlagabschnitt (6b) aufweist,
der Karkassen-Hauptabschnitt (6a) an dem Paar von Wulstkernen (4a) befestigt ist, sich der Karkassen-Umschlagabschnitt (6b) von dem Karkassen-Hauptabschnitt (6a) aus erstreckt und durch Umschlagen eines Umfangs der Wulstkerne (4a) von einer Reifenbreiten-Innenseite zu einer Reifenbreiten-Außenseite gebildet wird und
im Reifenbreiten-Querschnitt im Referenzzustand das umgeschlagene Ende (6c) des Karkassen-Umschlagabschnitts (6b) auf einer in Reifenradialrichtung liegenden Seite weiter innen als eine Position der Reifenmaximalbreite angeordnet ist.

5. Notlaufreifen (1) nach einem der vorhergehenden Ansprüche, wobei die Karkasse (6) ein Paar von geteilten Karkassen bildet, von denen ein in Reifenbreitenrichtung mittiger Abschnitt herausgezogen wird.

6. Notlaufreifen (1) nach einem der vorhergehenden Ansprüche, wobei eine Reifenradialhöhe des umgeschlagenen Endes (6c) des Karkassen-Umschlagabschnitts (6b) aus der Richtung der in Reifenradialrichtung innersten Position der Karkasse (6) 30 mm oder weniger beträgt.

**Revendications**

1. Pneumatique (1) comprenant une partie de bande de roulement (2), une paire de parties de paroi latérale (3) qui sont continues sur les deux côtés de la partie de bande de roulement (2), des parties de talon (4) qui sont continues sur chaque partie de paroi latérale, des caoutchoucs de renforcement latéraux (5) et une carcasse (6) qui est formée par des nappes de câbles agencés radialement qui s'étendent de façon toroïdale entre la paire de parties de talon (4) ; dans lequel :

lorsque le pneumatique (1) est monté sur une jante et qu'une pression interne de 250 kPa ou plus est appliquée sur le pneumatique (1),
dans le cas dans lequel une largeur en coupe transversale SW du pneumatique (1) est inférieure à 165 mm, un rapport de la largeur en coupe transversale SW sur un diamètre externe OD du pneumatique, SW/OD, est de 0,26 ou moins ; et
dans le cas dans lequel la largeur en coupe transversale SW du pneumatique est de 165 mm ou plus, la largeur en coupe transversale SW et le diamètre externe OD du pneumatique (1) satisfont une expression relationnelle :

$OD \geq 2{,}135 \times SW + 282{,}3$ (mm) ; **caractérisé en ce que** :
le pneumatique est un pneumatique zéro pression ; **en ce que** :
les caoutchoucs de renforcement latéraux (5) comprennent une section en coupe transversale en forme de croissant qui est disposée sur les parties de paroi latérale (3) ; **en ce que** :
lorsque H1 (mm) est une longueur maximum radiale de pneumatique du caoutchouc de renforcement latéral (5) selon une section en coupe transversale dans la direction de largeur du pneumatique dans un état de référence dans lequel le pneumatique (1) est monté sur une jante et est rempli selon une pression interne prédéterminée tandis qu'aucune charge n'est appliquée dessus, une expression relationnelle :

$$10 \text{ (mm)} \leq (SW/OD) \times H1 \leq 20 \text{ (mm)}$$

est satisfaite ; **en ce que** :
le module d'étirement à 50 % des caoutchoucs de renforcement latéraux (5) est compris entre 1,5 et 6,0 Mpa ; et **en ce que** :
le pneumatique (1) présente un volume d'air de 15 000 cm$^3$ ou plus.

2. Pneumatique zéro pression (1) selon la revendication 1, dans lequel :

les parties de talon (4) comportent des noyaux de talon (4a) et comportent en outre des éléments de remplissage de talon (7) sur un côté externe radial de pneumatique des noyaux de talon (4a) ; et

lorsque H2 est une longueur d'un segment de ligne droite qui connecte un point le plus externe radial de pneumatique de l'élément de remplissage de talon (7) et un point le plus externe radial de pneumatique du noyau de talon (4a) selon une section en coupe transversale dans la direction de largeur du pneumatique dans l'état de référence, H1 et H2 satisfont :

$$1{,}8 \leq H1/H2 \leq 3{,}5.$$

3. Pneumatique zéro pression (1) selon la revendication 1 ou 2, dans lequel une épaisseur maximum des caoutchoucs de renforcement latéraux (5) mesurée dans une direction perpendiculaire à la carcasse (6) est de 6 mm ou moins.

4. Pneumatique zéro pression selon l'une quelconque des revendications 1 à 3, dans lequel :

les parties de talon (4) comportent des noyaux de talon (4a) ;

la carcasse (6) comporte un corps principal de carcasse (6a) et une partie repliée de carcasse (6b), le corps principal de carcasse (6a) étant fixé à la paire de noyaux de talon (4a), la partie repliée de carcasse (6b) s'étendant depuis le corps principal de carcasse (6a) et étant formée en repliant une circonférence des noyaux de talon (4a) depuis un côté interne dans la direction de largeur du pneumatique jusqu'à un côté externe dans la direction de largeur du pneumatique ; et

selon la section en coupe transversale dans la direction de largeur du pneumatique dans l'état de référence, l'extrémité repliée (6c) de la partie repliée de carcasse (6b) est située sur un côté radial de pneumatique plus interne qu'une position de largeur maximum de pneumatique.

5. Pneumatique zéro pression (1) selon l'une quelconque des revendications qui précèdent, dans lequel la carcasse (6) forme une paire de carcasses divisées dont une région centrale dans la direction de largeur du pneumatique est extraite.

6. Pneumatique zéro pression (1) selon l'une quelconque des revendications qui précèdent, dans lequel une hauteur radiale de pneumatique de l'extrémité repliée (6c) de la partie repliée de carcasse (6b) depuis une direction de position la plus interne radiale de pneumatique de la carcasse (6) est de 30 mm ou moins.

# FIG. 1

## REFERENCES CITED IN THE DESCRIPTION

### Patent documents cited in the description

- WO 2012176476 A1
- EP 2781372 A
- WO 2015182153 A

### Non-patent literature cited in the description

- JATMA Year Book. JATMA (The Japan Automobile Tyre Manufacturers Association)
- ETRTO STANDARD MANUAL. ETRTO (the European Tyre and Rim Technical Organisation)
- TRA YEAR BOOK. TRA (the Tire and Rim Association,Inc.)
- FUTURE DEVELOPMENTS. ETRTO, 2013